# EUROPÄISCHE PATENTANMELDUNG

(11) **EP 3 734 173 A1**
(43) Veröffentlichungstag der Anmeldung: **04.11.2020**
(21) Anmeldenummer: 20166851.4
(22) Anmeldetag: 30.03.2020
(51) Int. Cl.: F24F 3/147, F24F 11/00, F24F 12/00

(54) **VORRICHTUNG ZUR LUFTBEFEUCHTUNG UND VERFAHREN ZUM BETRIEB DER VORRICHTUNG**

(30) Priorität: 05.04.2019 DE 102019109025
(71) Anmelder: Viessmann Werke GmbH & Co. KG, 35108 Allendorf (DE)
(72) Erfinder: Klausmann, Werner, 35083 Wetter (DE)
(74) Vertreter: Wolf, Michael

(57) **Zusammenfassung**

Die Erfindung betrifft eine Vorrichtung zur Luftbefeuchtung, umfassend einen Enthalpie-Wärmeübertrager (1), der Anschlüsse (1.1, 1.2, 1.3, 1.4) für Außenluft, Fortluft, Zuluft und Abluft aufweist, wobei dem am Enthalpie-Wärmeübertrager (1) vorgesehenen Anschluss (1.4) für Abluft in Strömungsrichtung der Abluft gesehen eine Befeuchtungseinrichtung (2) vorgeschaltet ist. Nach der Erfindung ist neben dem Enthalpie-Wärmeübertrager (1) ein feuchtigkeitsdichter, mit den Anschlüssen (1.1, 1.2, 1.3, 1.4) für Außenluft, Fortluft, Zuluft und Abluft verbindbarer Wärmeübertrager (6) vorgesehen.

## Beschreibung

Die Erfindung betrifft eine Vorrichtung zur Luftbefeuchtung gemäß dem Oberbegriff des Patentanspruchs 1.

Eine Vorrichtung zur Luftbefeuchtung der eingangs genannten Art ist aus dem Dokument JP 55079949 A bekannt. Diese besteht aus einem Enthalpie-Wärmeübertrager, der Anschlüsse für Außenluft, Fortluft, Zuluft und Abluft aufweist, wobei dem am Enthalpie-Wärmeübertrager vorgesehenen Anschluss für Abluft in Strömungsrichtung der Abluft gesehen eine Befeuchtungseinrichtung vorgeschaltet ist.

Eine weitere Vorrichtung dieser Art wird von der Anmelderin unter der Produktbezeichnung VITOVENT 300-W (Typ H32E) hergestellt und vertrieben. Diese Vorrichtung besteht insbesondere aus einem Enthalpie-Wärmeübertrager, der Anschlüsse für Außenluft, Fortluft, Zuluft und Abluft aufweist. Unter einem Enthalpie-Wärmeübertrager ist dabei hier und nachfolgend stets ein solcher Wärmeübertrager gemeint, bei dem in der Fortluft enthaltene Feuchtigkeit über eine am Wärmeübertrager vorgesehene Membran der Außenluft - allerdings ungeregelt - zugeführt wird. Diese Art der Feuchtigkeitsrückgewinnung basiert dabei auf dem Osmoseprinzip, wobei Wasser in flüssiger Form durch die besagte Membran diffundiert, und zwar angetrieben durch das Konzentrationsgefälle der Feuchtigkeit von der warme Fortluft zur kalten Außenluft. Der Wärmeübertrager ist dabei regelmäßig als Gegenstrom-Wärmeübertrager, insbesondere als Plattenwärmeübertrager) ausgebildet.

Der Erfindung liegt die Aufgabe zugrunde, eine Vorrichtung zur Luftbefeuchtung der eingangs genannten Art zu verbessern. Insbesondere soll eine gut regelbare Vorrichtung zur Luftbefeuchtung geschaffen werden, die zudem höchsten hygienischen Ansprüchen gerecht wird.

Diese Aufgabe ist mit einer Vorrichtung zur Luftbefeuchtung durch die im Kennzeichen des Patentanspruchs 1 aufgeführten Merkmale gelöst.

Nach der Erfindung ist also vorgesehen, dass neben dem Enthalpie-Wärmeübertrager ein feuchtigkeitsdichter, mit den Anschlüssen für Außenluft, Fortluft, Zuluft und Abluft verbindbarer Wärmeübertrager vorgesehen ist.

Mit anderen Worten ausgedrückt, zeichnet sich die erfindungsgemäße Vorrichtung zur Luftbefeuchtung somit dadurch aus, dass die Befeuchtungseinrichtung als Abluftbefeuchter ausgebildet ist und über diesen Abluftbefeuchter geregelt werden kann bzw. geregelt wird, wie viel Feuchtigkeit dem Enthalpie-Wärmeübertrager und damit letztlich der Zuluft zugeführt wird.

Andere vorteilhafte Weiterbildungen ergeben sich aus den abhängigen Patentansprüchen.

Der Vollständigkeit halber wird noch darauf hingewiesen, dass die Anmelderin auch noch eine Vorrichtung zur Luftbefeuchtung unter der Produktbezeichnung VITOVENT 300-W (Typ H32S) herstellt und vertreibt. Bei dieser Lösung ist ein Kreuz-Gegenstrom-Wärmeübertrager ohne Membran zur Feuchtigkeitsübertragung vorgesehen. Stattdessen ist bei dieser Lösung dem Anschluss für die Zuluft in Strömungsrichtung der Zuluft gesehen eine Befeuchtungseinrichtung nachgeschaltet. Diese Lösung hat aber einerseits den Nachteil, dass sich hygienische Probleme der Befeuchtungseinrichtung unmittelbar auf die Zuluft auswirken. Andererseits wird bei dieser Lösung darüber hinaus und im Gegensatz zur erfindungsgemäßen Lösung nicht die in der Abluft enthaltene Feuchtigkeit genutzt.

Außerdem wird noch auf die weiter abliegenden Dokumente DE 23 60 068 A1, DE 102 20 631 A1, DE 20 2004 017 266 U1, DE 10 2009 057 157 A1, WO 2014/036744 A1 und DE 10 2016 106 046 A1 hingewiesen.

Die erfindungsgemäße Vorrichtung zur Luftbefeuchtung einschließlich ihrer vorteilhaften Weiterbildungen gemäß der abhängigen Patentansprüche wird nachfolgend anhand der zeichnerischen Darstellung eines bevorzugten Ausführungsbeispiels näher erläutert.

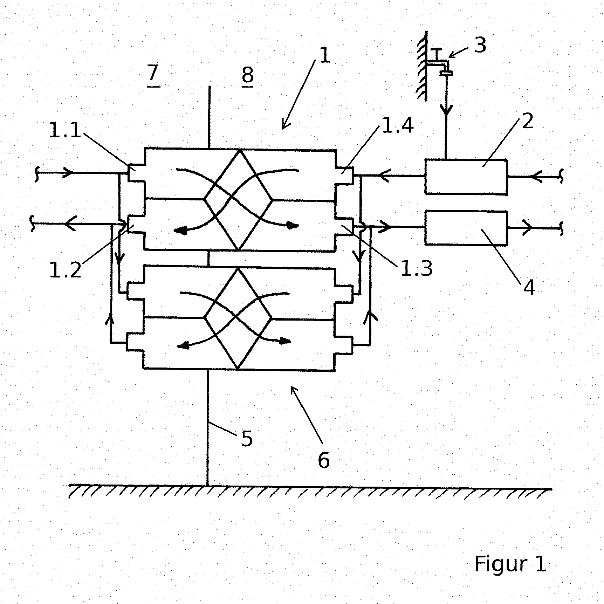

Es zeigt schematisch
- Figur 1: die erfindungsgemäße Vorrichtung zur Luftbefeuchtung mit Befeuchtungseinrichtung und Schalldämpfer.

Die in der einzigen Figur dargestellte Vorrichtung zur Luftbefeuchtung besteht in bekannter Weise zunächst aus einem Enthalpie-Wärmeübertrager 1. Dieser weist zur Übertragung von in der Fortluft enthaltener Feuchtigkeit auf die einströmende Au-ßenluft vorzugsweise eine nach dem Osmoseprinzip arbeitende Membran auf. Außerdem weist der Enthalpie-Wärmeübertrager 1 Anschlüsse 1.1, 1.2, 1.3, 1.4 für Außenluft, Fortluft, Zuluft und Abluft auf. Dabei ist bevorzugt vorgesehen, dass die Anschlüsse für Außenluft 1.1 und Fortluft 1.2 fluidisch mit einer Umgebung eines Gebäudes und die Anschlüsse für Zuluft 1.3 und Abluft 1.4 fluidisch mit einem Innenraum des Gebäudes verbunden bzw. verbindbar ausgebildet sind. Die senkrechte Linie in der einzigen Figur stellt eine bzw. die Wand 5 zwischen der Umgebung (links in der Figur) und dem Innenraum des Gebäudes (entsprechend rechts in der Figur) dar.

Um die Vorrichtung mit einem hohen Wirkungsgrad betreiben zu können, ist dabei ferner bevorzugt vorgesehen, dass einerseits die Anschlüsse für Außenluft 1.1 und Fortluft 1.2 mit Distanz voneinander in der Umgebung des Gebäudes und/oder andererseits die Anschlüsse für Zuluft 1.3 und Abluft 1.4 mit Distanz voneinander im Innenraum des Gebäudes mündend ausgebildet sind. Die Maßgabe "mit Distanz voneinander" bringt dabei zum Ausdruck, dass die jeweiligen Anschlüsse soweit von einander entfernt angeordnet sind, dass zum Beispiel am Anschluss 1.2 abströmende Fortluft nicht direkt mit der dem Anschluss 1.1 zuströmenden Außenluft vermischt wird.

Weiterhin ist vorgesehen, dass dem am Enthalpie-Wärmeübertrager 1 vorgesehenen Anschluss 1.4 für Abluft in Strömungsrichtung der Abluft gesehen eine Befeuchtungseinrichtung 2 vorgeschaltet ist. Verfahrensmäßig ausgedrückt ist somit vorgesehen, dass ein Maß an am Anschluss für Zuluft 1.3 vorliegender Luftfeuchtigkeit über die Befeuchtungseinrichtung 2 geregelt wird.

Zum Betrieb der Befeuchtungseinrichtung 2 ist diese mit einer Wasserversorgungseinrichtung 3, dargestellt in Form eines Wasserhahns, hydraulisch verbunden ausgebildet.

Wesentlich ist nun, wie dargestellt, dass neben dem Enthalpie-Wärmeübertrager 1 auch noch ein feuchtigkeitsdichter, mit den entsprechenden Anschlüssen 1.1, 1.2, 1.3, 1.4 für Außenluft, Fortluft, Zuluft und Abluft verbindbarer Wärmeübertrager 6 vorgesehen ist. Dabei wird orientiert am Feuchtigkeitsbedarf vorzugsweise mindestens ein Teil der die Anschlüsse 1.1, 1.2, 1.3, 1.4 für Außenluft, Fortluft, Zuluft und Ablauf durchströmenden Luft über den feuchtigkeitsdichten Wärmeübertrager 6 geleitet.

Schließlich ist in an sich bekannter, aber bevorzugter Weise zur Geräuschreduktion im Innern des Gebäudes vorgesehen, dass dem am Enthalpie-Wärmeübertrager 1 vorgesehenen Anschluss 1.3 für Zuluft in Strömungsrichtung der Zuluft gesehen ein Schalldämpfer 4 nachgeschaltet ist.

Die erfindungsgemäße Vorrichtung zur Luftbefeuchtung funktioniert, wie folgt:
Außenluft strömt über den Anschluss 1.1 zum Enthalpie-Wärmeübertrager 1 und wird dort von der über den Anschluss 1.4 in den Enthalpie-Wärmeübertrager 1 eingeströmten Abluft erwärmt, bevor sie als Zuluft über den Anschluss 1.3 ins Gebäude gelangt. Da die Abluft allerdings vor Erreichen des Enthalpie-Wärmeübertragers 1 auch die erfindungsgemäße Befeuchtungseinrichtung 2, der über die Wasserversorgungseinrichtung 3 Wasser zugeführt wird, durchströmt hat, kann der über den Anschluss 1.3 ins Gebäude geführten Zuluft genau im gewünschten Maße Feuchtigkeit über die Membran zugeführt werden, und dies bei offensichtlich besten hygienischen Bedingungen. Darüber hinaus ist, wie aus Figur 1 ersichtlich, zur reinen Wärmeübertragung (zum Beispiel vorteilhaft, wenn ein Neubau noch nachgetrocknet werden soll) der feuchtigkeitsdichte Wärmeübertrager 6 vorgesehen, wobei die entsprechenden Luftströme, was nicht extra dargestellt ist, am Bedarf orientiert gesteuert werden können, wobei der Enthalpie-Wärmeübertrager 1 und der feuchtigkeitsdichte Wärmeübertrager 6 auch als integrierter Wärmetauscher ausgebildet sein können, der dann vorzugsweise einerseits einen feuchtigkeitdurchlassenden und andererseits einen feuchtigkeitsdichten Membranabschnitt aufweist.

### Bezugszeichenliste

- 1: Enthalpie-Wärmeübertrager
- 1.1: Anschluss für Außenluft
- 1.2: Anschluss für Fortluft
- 1.3: Anschluss für Zuluft
- 1.4: Anschluss für Abluft
- 2: Befeuchtungseinrichtung
- 3: Wasserversorgungseinrichtung
- 4: Schalldämpfer
- 5: Wand
- 6: feuchtigkeitsdichter Wärmeübertrager
- 7: außen
- 8: innen

## Patentansprüche

1. Vorrichtung zur Luftbefeuchtung, umfassend einen Enthalpie-Wärmeübertrager (1), der Anschlüsse (1.1, 1.2, 1.3, 1.4) für Außenluft, Fortluft, Zuluft und Abluft aufweist, wobei dem am Enthalpie-Wärmeübertrager (1) vorgesehenen Anschluss (1.4) für Abluft in Strömungsrichtung der Abluft gesehen eine Befeuchtungseinrichtung (2) vorgeschaltet ist,
**dadurch gekennzeichnet,**
**dass** neben dem Enthalpie-Wärmeübertrager (1) ein feuchtigkeitsdichter, mit den Anschlüssen (1.1, 1.2, 1.3, 1.4) für Außenluft, Fortluft, Zuluft und Abluft verbindbarer Wärmeübertrager (6) vorgesehen ist.

2. Vorrichtung zur Luftbefeuchtung nach Anspruch 1,
**dadurch gekennzeichnet,**
**dass** die Befeuchtungseinrichtung (2) mit einer Wasservorsorgungseinrichtung (3) hydraulisch verbunden ausgebildet ist.

3. Vorrichtung zur Luftbefeuchtung nach Anspruch 1 oder 2,
**dadurch gekennzeichnet,**
**dass** der Enthalphie-Wärmeübertrager (1) zur Übertragung von in der Fortluft enthaltener Feuchtigkeit auf die einströmende Außenluft eine nach dem Osmoseprinzip arbeitende Membran aufweist.

4. Vorrichtung zur Luftbefeuchtung nach einem der Ansprüche 1 bis 3,
**dadurch gekennzeichnet,**
**dass** dem am Enthalpie-Wärmeübertrager (1) vorgesehenen Anschluss (1.3) für Zuluft in Strömungsrichtung der Zuluft gesehen ein Schalldämpfer (4) nachgeschaltet ist.

5. Vorrichtung zur Luftbefeuchtung nach einem der Ansprüche 1 bis 4,
**dadurch gekennzeichnet,**
**dass** die Anschlüsse für Außenluft (1.1) und Fortluft (1.2) fluidisch mit einer Umgebung eines Gebäudes und die Anschlüsse für Zuluft (1.3) und Abluft (1.4) fluidisch mit einem Innenraum des Gebäudes verbunden ausgebildet sind.

6. Vorrichtung zur Luftbefeuchtung nach Anspruch 5,
**dadurch gekennzeichnet,**
**dass** die Anschlüsse für Außenluft (1.1) und Fortluft (1.2) mit Distanz voneinander in der Umgebung des Gebäudes mündend ausgebildet sind.

7. Vorrichtung zur Luftbefeuchtung nach Anspruch 5 oder 6,
**dadurch gekennzeichnet,**
**dass** die Anschlüsse für Zuluft (1.3) und Abluft (1.4) mit Distanz voneinander im Innenraum des Gebäudes mündend ausgebildet sind.

8. Verfahren zum Betrieb der Vorrichtung zur Luftbefeuchtung gemäß Patentanspruch 1, wobei ein Maß an am Anschluss für Zuluft (1.3) vorliegender Luftfeuchtigkeit über die Befeuchtungseinrichtung (2) geregelt wird,
**dadurch gekennzeichnet,**
**dass** orientiert am Feuchtigkeitsbedarf mindestens ein Teil der die Anschlüsse (1.1, 1.2, 1.3, 1.4) für Außenluft, Fortluft, Zuluft und Ablauf durchströmenden Luft über den feuchtigkeitsdichten Wärmeübertrager (6) geleitet wird.
